Europäisches Patentamt

(19) European Patent Office

Office européen des brevets

(11) **EP 0 574 973 B1**

(12) **EUROPEAN PATENT SPECIFICATION**

(45) Date of publication and mention
of the grant of the patent:
**11.09.1996 Bulletin 1996/37**

(51) Int. Cl.$^6$: **A23D 7/00**, A23L 1/05

(21) Application number: **93201588.6**

(22) Date of filing: **03.06.1993**

(54) **Low fat food products**

Fettarme Nahrungsmittel

Produits alimentaires à faible teneur en graisse

(84) Designated Contracting States:
**AT BE CH DE DK ES FR GB GR IE IT LI NL PT SE**

(30) Priority: **16.06.1992 US 899670**
**30.10.1992 EP 92309959**

(43) Date of publication of application:
**22.12.1993 Bulletin 1993/51**

(73) Proprietors:
 • **UNILEVER N.V.**
 **NL-3000 DK Rotterdam (NL)**
 Designated Contracting States:
 **BE CH DE DK ES FR GR IT LI NL PT SE AT**
 • **UNILEVER PLC**
 **London EC4P 4BQ (GB)**
 Designated Contracting States:
 **GB IE**

(72) Inventors:
 • **Brown, Charles Rupert T.,**
 **Unilever Research**
 **Sharnbrook, Bedforshire, MK44 1LQ (GB)**
 • **Madsen, Robert Andrew**
 **Ellicott, Maryland 21043 (US)**
 • **Norton, Ian Timothy,**
 **Unilever Research**
 **Sharnbrook, Bedfordshire, MK44 1LQ (GB)**
 • **Wesdorp, Leendert Hendrik**
 **Ellicott City, Maryland 21042 (US)**

(74) Representative: **Joppe, Hermina L. P. et al**
 **Unilever N.V.**
 **Patent Division**
 **P.O. Box 137**
 **3130 AC Vlaardingen (NL)**

(56) References cited:
EP-A- 0 098 664          EP-A- 0 298 561
EP-A- 0 352 144          EP-A- 0 355 058
EP-A- 0 356 094          EP-A- 0 387 940
EP-A- 0 398 411          US-A- 4 849 243

EP 0 574 973 B1

**Description**

The present invention relates to low fat food products and to methods of preparing these. In particular the invention relates to low fat spreads, dressings, sauces and cheeses.

According to the general prior art the structuring of the aqueous phase of food products such as spreads or dressings is generally accomplished by the structuring by biopolymers such as proteins and carbohydrates. Polymeric molecules cross-link to form a tangled, interconnected molecular network in water. In those systems the presence of junction zones or entanglements leads to gel formation and the enclosure of water. Examples of those polymeric substances are hydrolysed gelling starch and gelatin, such as for example described in EP 298 561.

EP 298 561 discloses edible plastic dispersions comprising at least two gelling agents (A and B) forming at least two gelled phases. The examples of EP 298 561 discloses the preparation of such products by cooling a mixture of the gelling agents in water under quiescent conditions. Although applicants do not wish to be bound by any theory, it is believed that this method of preparation leads to the formation of two gelled phases, one being present as a continuous phase, the other being present as a non-continuous phase dispersed in the continuous phase. Generally the continuous phase will predominantly contain one of the gelling agents (A), possibly in combination with a small amount of the other gelling agent(s) (B); this phase will therefore be referred to as "the A-phase". The non-continuous phase will predominantly contain the other gelling agent (B), possibly in combination with a small amount of the other gelling agent(s) (A); this phase will therefore be referred to a the "B-phase". For example, example 7 of EP 298 561 discloses a product with gelatin and hydrolysed starch as the two gelling agents. At the levels and under the methodology as given in this example it is believed that there will be formed a continuous hydrolysed starch phase (which may possibly contain small amounts of gelatin) and a dispersed gelatin phase (which may possibly contain small amounts of hydrolysed starch).

US 4,849,234 discloses the preparation of water-in-oil emulsions containing 1-10 wt.% of thickening agents. Products according to this patent doe not appear to contain two distinct aqueous phases.

EP 387,940 relates to fat continuous spreads containing 23 to 29 wt.% of a continuous fat phase.

EP 398,411 relates to fat continuous spreads containing gelatin as the predominant gelling agent.

The phase structure of the plastic dispersion, i.e. the form in which the various gelled phases are present in the system, can be determined by conventional techniques, for example microscopy (e.g. in combination with staining), measurements of the elastic modules, mouthfeel, and plasticity of the product. Preferably, however the phase structure is determined by measuring the gel melting temperature of the system.

For example the transition point can adequately be determined by measuring the gel melting temperature of the system as follows: If the system is A-continuous the gel melting temperature will be $\alpha$ °C, while if the system is B-continuous, the gel melting temperature will be $\beta$ °C; at the transition point the system changes from having a gel melting temperature of $\alpha$ °C to having a gel melting temperature of $\beta$ °C. For a product prepared under quiescent conditions, at a constant level of gelling agent A, the level of gelling agent B is varried, leading to a A-continuous system (gel melting point $\alpha$ °C) for low levels of B and a B-continuous system (gel melting point $\beta$ °C) at higher levels of gelling agent B.

From the above it follows that, if a product is prepared under quiescent conditions, generally the phase behaviour will be determined by the type and relative amounts of the gelling agents. This, however, sometimes poses a problem, since for various reasons -e.g. costs or processing- it may be desirable to use relatively low levels of gelling agent B, while for other reasons -e.g. taste, texture and appearance- it may be desirable to have a system which is B-continuous. The present invention aims at solving this problem.

Surprisingly it has been found that if the product is prepared under specific cooling conditions, then the transition point at which the system changes from A-continuous to B-continuous can shift.

Accordingly the present invention relates to a process for the preparation of an edible dispersion comprising at least two gelling agents forming at least two distinct phases, and 0-20 w% of fat, said process comprising the steps of:

(1) providing a mixture of the gelling agents in water at an elevated temperature above the gel-forming temperature of two or more of these gelling agents; and
(2) cooling said mixture while applying shear until at least one of said distinct phases is gelled;

with the proviso that the dispersion as prepared by this method has a different phase structure than the same dispersion when prepared under quiescent conditions, whereby the phase structures can be evidenced by a difference of the gel melting temperatures of the phase structures of the dispersion as prepared by this method and of the dispersion prepared under quiescent conditions of more than 5°C.

Edible dispersions according to the invention, comprise at least two distinct phases, at least one of these phases is a gelled phase. More preferably at least two phases are gelled phases. Most preferably all phases are gelled. Also preferred is the presence of at least one continuous phase; the other phases may be discontinuous i.e. dispersed in the continuous phase or may be co-continuous, e.g. forming a bi-continuous system. For the purpose of the invention it is however preferred that the distinct phases are not completely separated, e.g. phase seperated systems wherein for example the distinct phases form bulk phases and/or separate layers are not preferred.

Although applicants do by no means wish to be bound by any theory it is believed that a preferred embodiment of the present invention can be explained as follows: during cooling one of the distinct phases will be the first to start gelling. If shear is applied this phase will become the dispersed phase, while under quiescent conditions this phase would be the continuous phase. Accordingly a preferred embodiment of the invention relates to a process for the preparation of an edible dispersion comprising at least two distinct phases, and 0-20 wt.% of fat said process comprising the steps

(1) providing a mixture of gelling agents in water at an elevated temperature above the gel-forming temperature of two or more of these gelling agents; and

(2) cooling said mixture while applying shear

wherein the composition of the two distinct phases is chosen such that the gelation rate of the phase that would become the continuous phase when cooled under quiescent conditions is higher than the gelation rate of the phase that would become the dispersed phase under quiescent conditions and wherein the plastic dispersion prepared by this method has a different continuous phase than the same dispersion prepared under quiescent conditions.

Edible dispersions of the invention preferably are plastic. Especially preferred is a plastic rheology, when the edible dispersions are used in spreads. For the purpose of the invention plasticity can be determined by the stress-strain relation.

This can be done with a series of measurements using a parallel plate "squeezing flow" geometry. The measurements are carried out using a parallel plate plastometer, wherein a block of the material to be tested is deformed between two parallel plates that move towards each other. (An apparatus that can suitably be used for these purposes is e.g. an Instron® apparatus). The deformation is inflicted at constant rate, preferably at a rate of deformation of $0.0167s^{-1}$ (i.e. 100% compression in 1 minute). Thus, if the thickness of the material to be tested is doubled, then the rate at which one plate is moved towards the other is also doubled. The corresponding stress at increasing deformation (strain) is determined by recording the force that is required to keep the rate of deformation constant while the deformation magnitude increases. A series of such measurements is carried out on a series of blocks of the material to be tested, having varying thicknesses. From this series of measurements the stress-strain relation of the material being tested is then obtained by extrapolating the results to infinite thickness. The stress $\sigma$, usually expressed in kPa, is recorded as function of the strain $\varepsilon$, wherein $\varepsilon = \ln(H_o/H)$, $H_o$ indicating the thickness of the test block, without any deformation, at the beginning of the measurement and H indicating the thickness of the block during the measurement while it is being squeezed between the two parallel plates. The stress-strain relation of a particular product is usually determined at a temperature representative for the temperature at which the product is to be used. Usually for the edible dispersion this will be between about 5°C and 25°C. In practice, mostly a temperature of about 15-20°C will be adequate. But, for example, for a product that is intended to be kept in a refrigerator, a temperature of e.g. 5 or 10°C may be chosen. Preferably, the stress-strain relation is measured at a temperature of 15°C.

Characterizing features of a curve for a plastic product, having a desirable rheology, are the strain ($\varepsilon_{max}$) at which the stress goes through a maximum ($\sigma_{max}$), the magnitude of that maximum stress and the ratio of the socalled plastic stress ($\sigma_p$) and the maximum stress $\sigma_{max}$. In an ideal system, the curve of the plastic product exhibits a maximum in the stress at a relatively small deformation $\varepsilon$ and then exhibits, at somewhat larger deformation, a region at which the stress remains constant at increasing deformation, i.e. showing a horizontal plateau. This part at which the slope of the curve ideally is zero, is called the plastic flow region. The stress in this region is called the plastic stress.

In practice, the curve of the stress-strain relation in the plastic flow region usually is not strictly horizontal. To prevent confusion about the point of the curve that determines the plastic stress, in case there is no horizontal plateau in the curve, the plastic stress is chosen to be the stress at the inflexion point. The strain at that point is indicated as $\varepsilon_p \cdot \sigma_{max}, \sigma_p$.

Preferably, the dispersion has a stress-strain relation with $\varepsilon_{max}$ is 0.01-0.5, $\sigma_{max}$ is 0.3-60 kPa and $\sigma_p/\sigma_{max}$ is 0.2-0.95. More preferably, $\varepsilon_{max}$ is 0.05-0.3, $\sigma_{max}$ is 0.8-30 kPa and $\sigma_p/\sigma_{max}$ is 0.3-0.8.

Edible dispersions prepared by a method of the invention have been subjected to such conditions of cooling under shear until at least one of the phases is gelled such that the phase structure of the dispersion obtained is different from the phase structure of the same composition when prepared under quiescent conditions.

For the propose of the invention quiescent conditions are those wherein the exposure of shear is the minimum needed during cooling of the hot mixed ingredients, to prevent the coalescence into bulk phases. Typically this means processing the mix containing the gelling agents through a single A or a combination of a single A plus C-unit, whereby the combined residence time is less than 4 minutes, of which preferably less than 30 seconds, more preferably less than 15 seconds in the A-unit. Analogously the cooling conditions in accordance to the invention relates to the application of shear for longer than the above described quiescent conditions, i.e a residence time of more than 4 minutes (more preferred from 5 to 100 minuts, most preferred from 6 to 15) in combined A and C-units and/or a residence time of more than 30 seconds in the A-unit (more preferred more than 1 minute, most preferred from 2 to 15 minutes).

Especially preferred is the use of cooling conditions which involve the combined use of one or more A-units and one or more C-units, whereby the total residence time in said units is more than 4 minutes and the total residence time in the A-units is more than 30 seconds.

During cooling in accordance to the invention, shear is applied. It is believed to be well within the ability of the skilled person to select those shear conditions which will provide the required "phase inversion" of the two distinct aqueous phases. Generally the shear rate is not very critical and may for example be from 100 to 100,000 rpm, for example 200 to 10,000 rpm, especially 400-4000 rpm, when using a normal size A- or C-units.

In a preferred embodiment of the invention the edible dispersion contains at least two distinct aqueous phases one of these being continuous (with respect to the aqueous phase) the other being dispersed in the continuous phase, whereby if the dispersion would be prepared under quiescent conditions, the two phases are inverted (i.e. the continuous phased becomes dispersed, the dispersed phase becomes continuous). In other words compositions of the invention have a different continuous phase than the same composition prepared under quiescent conditions.

As described above a difference in phase structure between the product according to the invention and the quiescent product can be evidenced by any suitable technique.

Suitably the difference in phase structure can be evidenced by a difference in gel melting temperature between the products. Preferably the absolute difference of the gel melting temperatures ($\sqrt{(\text{quiescent-shear})^2}$) is more than 5 °C, more preferred more than 7 °C, most preferred more than 10 °C. Generally the absolute difference in gel melting temperature will be less than 120°C, more generally less than 75°C or even less than 50°C.

As indicated above the above described process allows for the first time, the preparation of gelled products with two or more gelling agents, said products having a phase structure, which is different from the same product as prepared under quiescent conditions.

Accordingly, another preferred embodiment of the invention relates to an edible dispersion comprising at least two gelling agents forming at least two distinct phases, at least one of these phases being gelled, said dispersion having a different phase structure than the same dispersion when prepared under quiescent conditions.

Preferred products of the invention are spreads, dressings, sauces and cheeses. Particulary preferred are spreads and dressings.

Products in accordance to the invention preferably comprise less than 20 wt% of fat, and 0.1 to 30% of biopolymers as the gelling agents.

Suitable biopolymer materials are for example carbohydrates e.g. pectins, starches, carrageenan; polysaccharides such as xanthan gum, locust bean gum, hydrolysed starches (for example Paselli SA2 and N-oil), debranched amylopectin and microcrystalline cellulose; or proteins, for example milk protein, gelatin, soy protein.

The two gelling materials are for example used in a weight ratio of 1 : 10 to 10 : 1. Preferably one of the gelling agents is a protein, most preferred gelatin. Also preferably the other gelling agent is a starch, more preferred a hydrolysed starch such as Paselli SA2 or N-oil or a de-branched amylopectin. Especially preferred dispersions according to the invention comprise gelatin and hydrolysed starch or de-branched amylopectin, said dispersions being hydrolysed starch or de-branched amylopectin continuous when prepared by the method of the invention, but gelatin continuous when prepared under quiescent conditions.

The amount of biopolymer in compositions of the invention is dependent on the desired degree of thickening or gelling and the presence of other ingredients in the composition. Usually the amount of gelling agent lies between 0.1 and 30%, mostly between 0.1 and 25% based on the weight of the product. If hydrolysed starches are present their level is preferably from 5-20%; other gelling agents are generally used at levels of up to 10%, mostly 0.5-7%, most preferred 1-5% all percentages being based on the weight of the aqueous phase. Particulary preferred are combination of say 5-15% hydrolysed starch or de-branched amylopectin and 0.5-5% of other gelling materials. Preferably the other gelling material includes gelatin.

Compositions of the invention comprise less than 20 wt% of fat, more preferred from 0 to 10%, most preferred compositions of the invention are substantially free from fat or contain very low levels of fat (say from 0.01 to 2wt%). Suitable edible triglyceride materials are for example disclosed Bailey's Industrial Oil and Fat Products, 1979. Other fatty materials, for example sucrose fatty acid polyesters may be used as a replacement for part or all of the triglyceride material. If fat is present, this will generally be in the form of a dis-continuous or dispersed phase.

In addition to the above mentioned ingredients, food products in accordance to the invention may optionally contain further ingredients suitable for use in these products. Examples of these materials are sugar or other sweetener materials, EDTA, spices, salt, bulking agents, flavouring materials, colouring materials, proteins, acids, vegetable particles etc.

Generally the balance of compositions of the invention will be water. The level of water may be from 10 to 99.8 wt%, but generally the level will be more than 50 wt%, more preferred more than 70 wt% or even more than 80 wt% and less than 98 wt% more preferred less than 95 wt%.

The invention will be illustrated by means of the following examples.

### Example 1

Eight tub samples of the following formulation was prepared:

| Ingredients | % wt |
|---|---|
| Gelatin | 3.00 |
| N-lite D[R] Starch[1] | 7.50 |
| Buttermilk powder | 2.00 |
| Salt | 1.10 |
| Potassium sorbate | 0.13 |
| Beta-carotene | 0.05 |
| Kaomel[R] fat[2] | 3.00 |
| Water to Balance | 100 |

[1] N-lite D[R] Starch is a hydrolyzed maltodextrin starch obtained from National Starch and Chemical Company of Bridgewater, NJ.
[2] Kaomel[R] is a partially hydrogenated soybean/cottonseed oil obtained from Van den Bergh Foods of Joliet, IL.

The foregoing compositions was prepared by dispersing the N-lite D[R] Starch in cold water and heating while stirring in a stirring tank to 80° to completely hydrolyse the starch. The gelatin, buttermilk powder, potassium sulfate and beta-carotene were added to dissolve. The solution was then cooled to 60° in a stirring unit.

Lactic acid was added to obtain a pH of 5.0 in then melted Kaomel (R) was added to the mixture still maintained at 60°. The composition was then passed through a homogenizer at 100 bar to homogenize.

The homogenized compositions were then passed into a cooling unit (A) and cooled to the temperatures indicated in Table 1 below. Some of the compositions were additionally passed from the cooling unit (A) to a mixing unit (C) at the temperatures presented in Table 1 below:

Table 1

| TUB # | COOLING UNIT (A) °C | MIXING UNIT (C) °C |
|---|---|---|
| 1 | 7.48 | -- |
| 2 | 7.58 | -- |
| 3 | 7.66 | 24 |
| 4 | 7.35 | 22 |
| 5 | 7.40 | 20 |
| 6 | 7.64 | 18 |
| 7 | 7.95 | 18 |
| 8 | 8.22 | 18 |

The cooling units (A) were run at a rate of 1800 rpm. The mixing units (C) for the compositions filled in tubs 3-5 were run at a rate of 200 rpm. The mixing units for the compositions filled in tubs 6-8 were run at a speed of 1800 rpm.

Tubs 1 and 2 were prepared under quiescent conditions, tubs 3-8 under cooling conditions in accordance to the invention.

It was observed that the compositions in tubs 1 and 2 produced an obvious gelatin-continuous sample. The compositions of tubs 3-5 produced a starch-continuous product upon filling and the samples were increasingly thicker form tubs 3-5. The compositions of tubs 6-8 also produced starch-continuous product which were thicker in texture than the compositions of tubs 3-5.

The compositions of tubs 3-5 having a (C) unit run at 200 rpm were course upon spreading and set up after 19 hours.

The compositions having a (C) unit run at 1800 rpm (tubs 6-8) produced products having a smoother texture than the compositions of tubs 3-5.

The compositions having starch levels of less than 9% produced by the prior art process yielded dispersions which were gelatin continuous and did not possess acceptable spread characteristics. Compositions produced according to the inventive process contain less than 9% starch were starch continuous and yet produce spreads having consumer acceptable characteristics.

Example 2

A composition containing 8.5% wt of 6110:97-2 starch blend rather that the N-Lite $D^{(R)}$ starch was prepared according to Example 1 with the following exception. An additional cooling unit cooling the mixture to between 5-10°C was used.

Starch blend 6110:97-2 is a blend of modified food starches, having theological properties, characterized by a log $G'_{max}$ of 5.0 after complete dispersion in water at a starch solids of 17.2% and a log G' of 4.70 (log of 1/2 G') at 6486 seconds after dispersion and was supplied by National starch and Chemical Company of Bridgewater, NJ.

It was observed that the resulting compositions was starch continuous and had acceptable spready characteristics.

Example 3

Eight composition containing 7.80% wt of a modified tapioca starch rather than 7.50 N-lite $D^{(R)}$ starch is prepared according to Example 1.

The compositions are filled into tubs.

Example 4

Several systems of gelatin and maltodextrin (Paselli SA2) were prepared according to two methods. Method 1, involves the preparation of gelatin maltodextrin mixtures in water, by dissolving the maltodextrin at 90 °C, cooling to 60 °C followed by adding the gelatin and cooling under quiescent conditions. Method 2, involves the same method except that the mixture is cooled in a combination of an A and C unit for 30 minutes while shearing at 800 rpm.

The gelatin concentration was 3 wt% for all systems, the concentration of Paselli SA2 was varried between 2 and 20 wt%. For all systems the gel-melting temperature was determined. The following results were obtained.

| Concentration Paselli SA2 (wt%) | Gel-melting temperature °C | |
|---|---|---|
| | method1 | method2 |
| 2 | 28 | 30 |
| 4 | 28 | 30 |
| 6 | 28 | 33 |
| 8 | 28 | 37 |
| 10 | 28 | 57 |
| 12 | 28 | 55 |
| 14 | 32 | 60 |
| 16 | 60 | 68 |
| 18 | 55 | n.m |
| 20 | 55 | n.m |

These results show that for concentrations of maltodextrin of between about 6 and about 14 wt%, the system prepared according to the invention has a different phase structure than the composition as prepared under quiescent conditions.

## Claims

1. A process for the preparation of an edible dispersion comprising at least two distinct aqueous phases, and 0-20 wt.% of fat, said process comprising the steps of:

   (1) providing a mixture of the gelling agents in water at an elevated temperature above the gel-forming temperature of two or more of these gelling agents; and
   (2) cooling said mixture while applying shear until at least one of said distinct phases is gelled;

   with the proviso that the dispersion as prepared by this method has a different phase structure than the same dispersion when prepared under quiescent conditions, whereby the phase structures can be evidenced by a difference of the gel melting temperatures of the phase structures of the dispersion as prepared by this method and of the dispersion prepared under quiescent conditions of more than 5°C.

2. A process for the preparation of an edible dispersion comprising at least two gelling agents forming at least two distinct aqueous phases, and 0-20 wt.% of fat said process comprising the steps

   (1) providing a mixture of gelling agents in water at an elevated temperature above the gel-forming temperature of two or more of these gelling agents; and

   (2) cooling said mixture while applying shear

   wherein the composition of the two aqueous distinct phases is chosen such that the gelation rate of the phase that would become the continuous phase when cooled under quiescent conditions is higher than the gelation rate of the phase that would become the dispersed phase under quiescent conditions and wherein the plastic dispersion prepared by this method has a different continuous phase than the same dispersions prepared under quiescent conditions.

3. Edible dispersion obtainable by a process according to claim 1 or 2.

4. Edible dispersion according to claim 3, comprising 0-20 wt.% of fat and at least two gelling agents forming at least two distinct phases, at least one of these phases being gelled, said dispersion having a different phase structure than the same dispersion when prepared under quiescent conditions.

5. Edible dispersion according to claim 3 or 4, being a spread, dressing, sauce or cheese.

6. Edible dispersion according to one or more of the claims 3-5, being plastic and preferably having a stress strain relation wherein $\varepsilon_{max}$ is 0.01-0.5, $\sigma_{max}$ is 0.3-60 kPa and $\sigma_p/\sigma_{max}$ is 0.2-0.95.

7. Edible dispersion according to one or more of the claims 3-6 comprising gelatin and hydrolysed starch or debranched amylopectin.

8. Edible dispersion according to claim 7, being hydrolysed starch or debranched amylopectin continuous.

**Patentansprüche**

1. Verfahren zur Herstellung einer eßbaren Dispersion, die mindestens zwei unterschiedliche wäßrige Phasen und 0 bis 20 Gew.-% Fett umfaßt, wobei das Verfahren die Schritte umfaßt:

   (1) Bereitstellen einer Mischung von Geliermitteln in Wasser bei einer erhöhten Temperatur oberhalb der Gelbildungstemperatur der zwei oder mehreren dieser Geliermittel und
   (2) Kühlen dieser Mischung unter Anlegen einer Scherung, bis mindestens eine der unterschiedlichen Phasen geliert ist,

   mit der Maßgabe, daß die nach diesem Verfahren hergestellte Dispersion eine andere Phasenstruktur hat als die gleiche, unter ruhenden Bedingungen hergestellte Dispersion, wobei die Phasenstrukturen durch einen Unterschied von mehr als 5°C zwischen den Gelschmelztemperaturen der Phasenstrukturen der nach diesem Verfahren hergestellten Dispersion und der unter ruhenden Bedingungen hergestellten Dispersion nachgewiesen werden können.

2. Verfahren zur Herstellung einer eßbaren Dispersion, die mindestens zwei unterschiedliche wäßrige Phasen und 0 bis 20 Gew.-% Fett umfaßt, wobei das Verfahren die Schritte umfaßt:

   (1) Bereitstellen einer Mischung von Geliermitteln in Wasser bei einer erhöhten Temperatur oberhalb der Gelbildungstemperatur der zwei oder mehreren dieser Geliermittel und
   (2) Kühlen dieser Mischung unter Anlegen einer Scherung,

   worin die Zusammensetzung der zwei wäßrigen unterschiedlichen Phasen so gewählt wird, daß die Geliergeschwindigkeit der Phase, die beim Kühlen unter ruhenden Bedingungen die kontinuierliche Phase werden würde, höher ist als die Geliergeschwindigkeit der Phase, die unter ruhenden Bedingungen die dispergierte Phase werden würde, und worin die nach diesem Verfahren hergestellte plastische Dispersion eine andere kontinuierliche Phase aufweist als die gleichen, unter ruhenden Bedingungen hergestellten Dispersionen.

3. Eßbare Dispersion, erhältlich nach einem Verfahren gemäß Anspruch 1 oder 2.

4. Eßbare Dispersion nach Anspruch 3, umfassend 0 bis 20 Gew.-% Fett und mindestens zwei Geliermittel, die mindestens zwei unterschiedliche Phasen bilden, wobei mindestens eine dieser Phasen geliert ist und die Dispersion eine andere Phasenstruktur aufweist als die gleiche, unter ruhenden Bedingungen hergestellte Dispersion.

5. Eßbare Dispersion nach Anspruch 3 oder 4, die ein Aufstrich, ein Dressing, eine Soße oder ein Käse ist.

6. Eßbare Dispersion nach einem oder mehreren der Ansprüche 3 bis 5, die plastisch ist und vorzugsweise eine Spannungs-Deformations-Beziehung hat, in welcher $\varepsilon_{max}$ 0,01 bis 0,5 ist, $\sigma_{max}$ 0,3 bis 60 kPa ist und $\sigma_p/\sigma_{max}$ 0,2 bis 0,95 ist.

7. Eßbare Dispersion nach einem oder mehreren der Ansprüche 3 bis 6, die Gelatine und hydrolysierte Stärke oder entzweigtes Amylopektin umfaßt.

8. Eßbare Dispersion nach Anspruch 7, deren hydrolysierte Starke- oder entzweigte Amylopektinphase kontinuierlich ist.

**Revendications**

1. Procédé de préparation d'une dispersion comestible comprenant au moins deux phases aqueuses distinctes et 0-20% en poids de graisse, ledit procédé consistant à :

   (1) fournir un mélange d'agents gélifiants dans l'eau à une température élevée au dessus de la température de formation de gel de deux ou plus de ces agents gélifiants ; et
   (2) à refroidir ledit mélange tout en appliquant un cisaillement jusqu'à gélification d'au moins l'une desdites phases distinctes ;

   à la condition que la dispersion préparée par ce procédé ait une structure de phases différente de la même dispersion préparée dans des conditions de repos, les structures de phases pouvant être mises en évidence par une différence des températures de fusion de gel des structures de phases de la dispersion préparée par ce procédé et de la dispersion préparée dans des conditions de repos de plus de 5°C.

2. Procédé de préparation d'une dispersion comestible comprenant au moins deux agents gélifiants formant au moins deux phases aqueuses distinctes et 0-20% en poids de graisse, ledit procédé consistant à

   (1) fournir un mélange d'agents gélifiants dans l'eau à une température élevée au dessus de la température de formation de gel de deux ou plusieurs de ces agents gélifiants ; et
   (2) refroidir ledit mélange tout en appliquant un cisaillement

   dans lequel la composition des deux phases aqueuses distinctes est choisie de façon telle que le taux de gélification de la phase qui serait devenue la phase continue lors du refroidissement dans des conditions de repos, soit plus élevé que le taux de gélification de la phase qui serait devenue la phase dispersée dans des conditions de repos et dans lequel la dispersion plastique préparée par ce procédé a une phase continue différente des mêmes dispersions préparées dans des conditions de repos.

3. Dispersion comestible qu'on obtient par un procédé selon la revendication 1 ou 2.

4. Dispersion comestible selon la revendication 3, comprenant 0-20% en poids de graisse et au moins des agents gélifiants formant au moins deux phases distinctes, au moins l'une de ces phases étant gélifiée, ladite dispersion ayant une structure de phases différente de la même dispersion préparée dans des conditions de repos.

5. Dispersion comestible selon la revendication 3 ou 4, qui est un produit à tartiner, un assaisonnement, une sauce ou un fromage.

6. Dispersion comestible selon une ou plusieurs des revendications 3-5, qui est plastique et qui a de préférence une relation contrainte/déformation dans laquelle $\varepsilon_{max}$ est 0,01-0,5, $\sigma_{max}$ est 0,3-60 kPa et $\sigma_p/\sigma_{max}$ est 0,2-0,95.

7. Dispersion comestible selon une ou plusieurs des revendications 3-6 comprenant de la gélatine et de l'amidon hydrolysé ou une amylopectine déramifiée.

8. Dispersion comestible selon la revendication 7, qui est continue en amidon hydrolysé ou en amylopectine déramifiée.